# EUROPEAN PATENT SPECIFICATION

(11) **EP 3 408 776 B1**
(45) Date of publication and mention of the grant of the patent: **03.11.2021**
(21) Application number: 16703176.4
(22) Date of filing: 29.01.2016
(51) Int. Cl.: G06F 21/32

(54) **USER INTERFACE ELEMENTS WITH FINGERPRINT VALIDATION**
BENUTZERSCHNITTSTELLENELEMENTE MIT FINGERABDRUCKVALIDIERUNG
ÉLÉMENTS D'INTERFACE UTILISATEUR À VALIDATION D'EMPREINTE DIGITALE

(43) Date of publication of application: 05.12.2018
(73) Proprietor: Sony Mobile Communications Inc., Minato-ku Tokyo 108-0075 (JP)
(72) Inventor: BERGSELL, Benny, 221 88 Lund (SE)
(74) Representative: Neij & Lindberg AB
(86) International application number: PCT/IB2016/050475
(87) International publication number: WO 2017/130031

(56) References cited:
- WO-A1-2013/155224
- US-A1- 2013 135 247

## Description

### TECHNICAL FIELD OF THE INVENTION

The technology of the present disclosure relates generally to electronic devices and, more particularly, to an electronic device having a display that is configured to scan a user's fingerprint for use in biometric authentication.

### BACKGROUND

Modern electronic devices are used to carry out various functions such as sending and receiving text messages, using social media networks and applications, making online purchases, and sending and receiving email. To obtain access to the various functions of the electronic device, many modern electronic devices employ "unlocking" or authentication techniques that involve entry of information by a user, such as a personal identification number (PIN) (e.g., typically a four digit number) or a password (e.g., a series of alphanumeric characters). The electronic device may be unlocked or individual applications, such as an application store, may be unlocked using a password. However, once the device or application is unlocked, any user, including an unauthorized user, generally has full access to the functions of the device or application. Thus, an unauthorized user may be able to send and receive data under the guise of the authorized user.

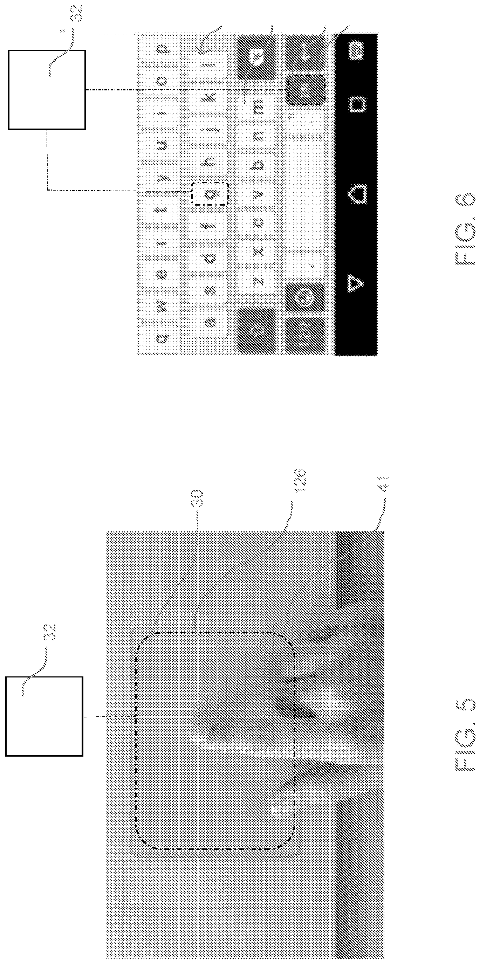

US 2013/135247 discloses a touch sensing apparatus including a panel unit in which a plurality of electrodes intersects with each other. The panel unit includes a first region in which the plurality of electrodes is disposed with a first interval therebetween and a second region in which the plurality of electrodes is disposed with a second interval therebetween. The second region is used for capturing a fingerprint of a user. The touch sensing apparatus is in a sleep mode when the method of fig. 5 is started and it is switched to an active mode only if an input fingerprint matches an authorized fingerprint.

WO2013/155224A1 discloses a touch screen that can read fingerprints at several areas of the screen.

### SUMMARY

Disclosed is an electronic device and a method that provides for biometric authentication before executing a function associated with a user input on a touch screen of the electronic device. When a user input is activated by a user, the electronic device is configured to detect the fingerprint of the user and compare the fingerprint against an authorized fingerprint. The function is executed if the fingerprints match. Otherwise, an optional secondary authentication process may be provided or the user may be inhibited from using the electronic device.

According to one aspect of the disclosure, an electronic device includes a touch screen configured to display a user interface in an unlocked state having displayed thereon at least one touch-sensitive user input for executing a function associated with a corresponding application, a processor having a memory for storing authorized fingerprint data corresponding to an authorized fingerprint, and a fingerprint reader coupled to the processor and to the at least one touch-sensitive user input for obtaining user fingerprint data corresponding to a user fingerprint simultaneously with activation of the at least one touch-sensitive user input. The processor is configured to compare the user fingerprint data obtained by the fingerprint reader with the authorized fingerprint data, and execute the function associated with the corresponding application upon the user fingerprint data corresponding to the authorized fingerprint data.

Optionally, the touch screen may include a perimeter that bounds an area in which the at least one touch-sensitive user input is located.

Optionally, the fingerprint reader may be disposed under or over the touch screen.

Optionally, the electronic device may include a plurality of fingerprint readers that are disposed at separated locations within the perimeter of the touch screen.

Optionally, an area of the fingerprint reader may be equal to an area of the touch screen, or an area of the at least one touch-sensitive user input.

Optionally, the at least one touch-sensitive user input may include a key on an alphanumeric keyboard.

Optionally, the alphanumeric keyboard may be displayed on the touch screen or on a computer keyboard.

Optionally, the electronic device may include a smart phone.

According to another aspect of the disclosure, a method for authenticating a user of an electronic device having a touch screen includes displaying a user interface in an unlocked state having at least one touch-sensitive user input for executing a function associated with a corresponding application, obtaining user fingerprint data corresponding to a user fingerprint simultaneously with activation of the at least one touch-sensitive user input, comparing the user fingerprint data against authorized fingerprint data corresponding to an authorized fingerprint associated with the electronic device, and executing the function associated with the corresponding application when the user fingerprint data corresponds to the authorized fingerprint data.

Optionally, obtaining data corresponding to the user fingerprint may include obtaining the data corresponding to the user fingerprint within an area of the at least one touch-sensitive user input; or using a fingerprint reader disposed above or below at least an area of the touch screen where the at least one touch-sensitive user input is located when the user interface is displayed.

Optionally, the method may further include inhibiting execution of the function when the user fingerprint data does not correspond to the authorized fingerprint data.

Optionally, the method may further include providing a secondary authentication process when the user fingerprint data does not correspond to the authorized fingerprint data.

Optionally, providing the secondary authentication process may include receiving a user personal identification number (PIN), comparing the user PIN against an authorized PIN stored in the electronic device, and executing the function when the user PIN matches the authorized PIN.

### BRIEF DESCRIPTION OF THE DRAWINGS

FIG. 1 is a schematic illustration of a front view of an electronic device having a fingerprint reader according to a first exemplary embodiment.
FIG. 2 is a schematic illustration of a front view of an electronic device having a fingerprint reader according to a second exemplary embodiment.
FIG. 3 is a schematic illustration of a front view of an electronic device having a fingerprint reader according to a third exemplary embodiment.
FIG. 4 is a schematic illustration of a front view of an electronic device having a fingerprint reader according to a fourth exemplary embodiment.
FIG. 5 is a schematic illustration of an exemplary fingerprint reader and user input.
FIG. 6 is a schematic illustration of still another exemplary fingerprint reader and user input.
FIG. 7 is a cross-section view of an exemplary electronic device and fingerprint reader.
FIG. 8 is a flowchart of a method for authenticating a user of an electronic device.
FIG. 9 is a block diagram of an exemplary electronic device.
FIG. 10 is a schematic view of a communication environment for the electronic device of FIG. 9.

### DETAILED DESCRIPTION OF EMBODIMENTS

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

Described below in conjunction with the appended figures are various embodiments of an electronic device and method of controlling access to functionality of the electronic device. The electronic device is typically-but not necessarily-a portable electronic device, and may take any form factor including, but not limited to, a mobile telephone, a tablet computing device, a laptop or desktop computer, a gaming device, a camera, or a media player. The electronic device shown in the appended figures is a mobile telephone, but applicability of aspects of the invention is not limited to mobile telephones.

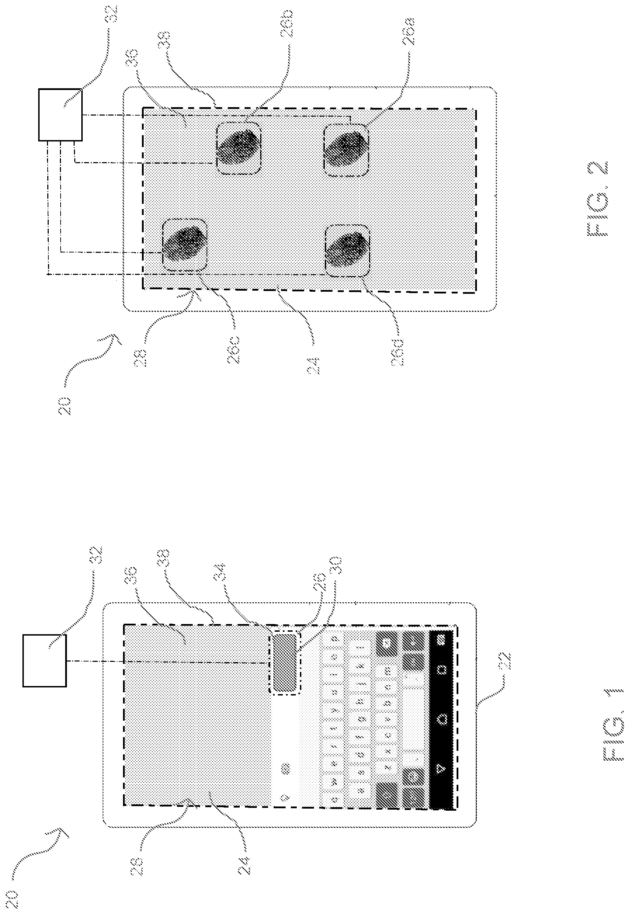

With initial reference to FIG. 1, illustrated is an exemplary electronic device 20. The electronic device 20 includes a housing 22 that retains a display and a fingerprint reader 26. The display includes a touch screen 24 that is configured to display a user interface 28 thereon for outputting visual information to a user of the electronic device 20. To implement touch screen functionality, the touch screen 24 includes a touch sensitive user input 30 disposed on the touch screen 24 and over the display. The user input 30 may be, for example, a capacitive touch sensitive input assembly or a resistive touch sensitive input. The fingerprint reader 26 is coupled to the user input 30 for receiving or detecting a user fingerprint associated with activation of the user input 30.

The user input 30 may be a touch cell of the touch screen or a touch button or other conventional input formed from one or more touch cells, the touch button displayed on the user interface 28 when the user interface 28 is displayed on the touch screen 24. The user interface 28 may be any user interface that is suitable for being displayed on the touch screen 24, such as a user interface associated with an application of the electronic device 20 or standard capabilities of an electronic device, such as text messaging or placing and receiving phone calls. Examples of user interfaces for applications include those associated with social network applications, application stores, mobile wallets, peer-to-peer mobile payment applications, and retailer mobile applications. The user input 30 may include more than one user input 30 and any input associated with executing a function of the corresponding application, such as a touch button for posting data to a social network or for answering an incoming phone call. The user input 30 may be activated by any force-producing input such as pressing, pushing, or touching by a finger of the user. Activation of the user input 30 may include any movement of the finger over the user input 30 that is detectable by the fingerprint reader 26.

The electronic device 20 includes a processor 32 having a memory for storing data corresponding to a fingerprint of an authorized user of the electronic device 20. The processor 32 is coupled to the fingerprint reader 26 and is configured to compare the user fingerprint data associated with activation of the user input 30 with the authorized fingerprint data. The process 32 is further configured to execute the function associated with the user input 30 when the user fingerprint data corresponds to the authorized fingerprint data. The user fingerprint data may be considered to correspond to the authorized fingerprint data when the data is compared and a matching score between the two sets of data exceeds a predetermined matching threshold. For example, a fingerprint reader may use minutiae based matching, where a set of minutiae points of the user fingerprint are extracted and compared against a set of minutiae points of the authorized fingerprint to generate a matching score. The two sets of minutiae points may be considered to be matched if their spatial and orientation differences are within specific thresholds. For example, if 20 minutiae points match in both position and orientation, the fingerprints may be considered to be a match. In addition to minutiae matching, any suitable type of matching routine may be used, such as pattern matching.

The fingerprint reader 26 may be disposed over the touch screen 24 or under the touch screen 24 such that the fingerprint reader 26 is interposed between the touch screen 24 and the user input 30. The fingerprint reader 26 may be disposed along a plane when the user input 30 is located when the user interface 28 is displayed on the touch screen 24.

The fingerprint reader is configured for biometric authentication during normal operation of the electronic device 20. FIG. 1 shows one embodiment of the fingerprint reader 26 where an area of the fingerprint reader 26 is equal to an area of the user input 30, as defined by a perimeter 34 of the user input 30. The area of the fingerprint reader 26 may be greater than the area of the user input 30 to provide for greater tolerance in fingerprint detection. The fingerprint reader 26 may be disposed below the user input 30 and along the plane of the user input 30, such that fingerprint detection occurs simultaneously with activation of the user input 30. The user input 30 and the fingerprint reader 26 may be located at any location within an area 36 of the touch screen 24 as bounded by a perimeter 38 (i.e.., the displayable area of the touch screen 24). The perimeter 38 of the touch screen 24 and the perimeter 34 of the user input 30 may both define a rectangular-shaped area, but it should be recognized that the touch screen 24 and the user input 30 may have any suitable shape, such as an oval or circular shape.

Referring now to FIG. 2, a second embodiment of the fingerprint reader of the electronic device 20 is shown. The electronic device 20 may include a plurality of fingerprint readers 26a, 26b, 26c, 26d that are disposed at separated locations within the area 36 of the touch screen 24 as defined by the perimeter 38. The fingerprint readers 26a, 26b, 26c, 26d may be located at positions of the touch screen 24 where the user input 30 or multiple user inputs 30 are located when the user interface 28 is displayed on the touch screen 24. Each of the plurality of fingerprint readers 26a, 26b, 26c, 26d may correspond to a user input and each fingerprint reader 26a, 26b, 26c, 26d may be coupled to the processor 32. The fingerprint readers 26a, 26b, 26c, 26d may be disposed along a plane of the corresponding user input such that fingerprint detection occurs instantaneously with activation of the user input. The configuration implementing the plurality of fingerprint readers 26a, 26b, 26c, 26d enables fingerprint detection for multiple user inputs or accommodates for a user input being displayed at a predictable or unpredictable location within the area 36 of the touch screen 24.

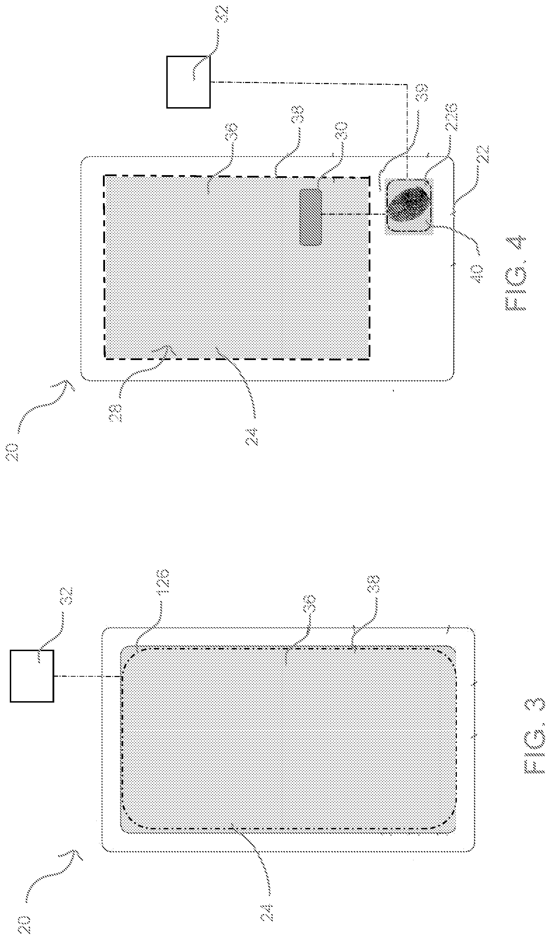

Referring now to FIG. 3, a third embodiment of the fingerprint reader of the electronic device 20 is shown. The fingerprint reader 126 may have an area equal to the area 36 of the touch screen 24 as defined by the perimeter 38 of the touch screen 24. The user input may be displayed at any location within the area 36 of the touch screen 24. More than one user input may be displayed within the area 36. The configuration implementing the fingerprint reader 126 having an area equal to the touch screen 24 enables fingerprint detection to occur simultaneously with activation of a user input at any position within the area 36 of the touch screen 24. The fingerprint reader 126 is coupled to the processor 32 for comparing the user fingerprint against the authorized fingerprint and executing the function associated with the user input, upon authentication of the user fingerprint.

Referring now to FIG. 4, a fourth embodiment of the fingerprint reader of the electronic device 20 is shown, which is not part of the invention. The fingerprint reader 226 may be located outside of the area 36 and the perimeter 38 of the touch screen 24. The fingerprint reader 226 is operatively coupled to the processor 32 and the user input 30. The user input 30 is located within the area 36 of the touch screen 24 such that the user input 30 may be separated from the fingerprint reader 226 by a portion 39 of the housing 22 of the electronic device 20 (e.g., the fingerprint reader 226 is outside the perimeter 38 and generally on the same plane as a surface of the touch screen 24). In another embodiment, the fingerprint reader 226 may be located within the area 36 of the touch screen 24 at a location separate from where the user input 30 is displayed. When the user input 30 is activated, a fingerprint input is called for and the electronic device 10 may display a graphical user interface 28 to prompt the user to enter a fingerprint by placing the user's fingertip against the fingerprint reader 226 in a predetermined area 40 of the fingerprint reader 226. The user may be guided to place his or her fingertip in the predetermined area 40 by the graphical user interface 28. It will be appreciated that any suitable visual formats and/or content for the graphical user interface 28 are possible.

FIGS. 5 and 6 illustrate further embodiments of the fingerprint reader previously described. The embodiment of Fig. 5 is not part of the invention.As shown in FIG. 5, the fingerprint reader 126 may be implemented with a trackpad having a trackpad button 41. The trackpad may be part of an electronic device such as a laptop computer or smart phone. The fingerprint reader 126 may have an area equal to an area of the trackpad button 41 such that the user fingerprint may be detected at any location within the area of the trackpad button 41. Any location on the trackpad button 41 may be associated with the user input 30, such that activation of the user input 30 is achieved by exerting a force on the trackpad button 41. The trackpad button 41 is coupled to the processor 32 for fingerprint detection and authentication.

As shown in FIG. 6, the fingerprint reader 26 may be implemented in an alphanumeric keyboard 42 that is associated with any suitable electronic device. For example, the alphanumeric keyboard 42 may be located on the touch screen of a smart phone,. A plurality of fingerprint readers 26 may be implemented in the alphanumeric keyboard 42. Each key 43 of the keyboard 42 may be a user input 30 coupled to a corresponding fingerprint reader 26 or the plurality of keys 43 may be coupled to one fingerprint reader 26. Individual keys such as an "enter", "return", or "delete" key may implement the fingerprint reader 26 to require authorization before execution of the respective function of the key.

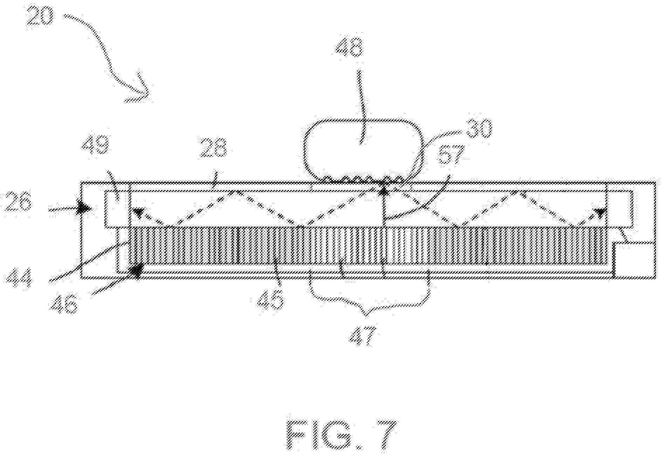

Referring now to FIG. 7, a cross-sectional view of the electronic device 20 having a fingerprint reader 26 is shown. The user input 30 may be disposed over the display 44. The fingerprint reader 26 may be interposed between the display 44 and the user interface 28. The display 44 may be a liquid crystal display (LCD). The LCD has cells of liquid crystal, each of which may be controlled individually to emit light. As is conventional, the brightness and color of the emitted light from the cells is controlled to display intended visual content on the display 44. In this regard, the display 44 has pixels 45 that are collectively arranged in a pixel array 46 and light output from each pixel 45 may be controlled individually. Some of the pixels 45 may be associated with a predetermined area 47 disposed below a user input 30 on the user interface 28. During detection of a fingerprint associated with a user's finger 48 activating the user input 30, the pixels 45 associated with the predetermined area 47 may be illuminated and reflections from the user's finger 48 may be sensed with light sensors 49.

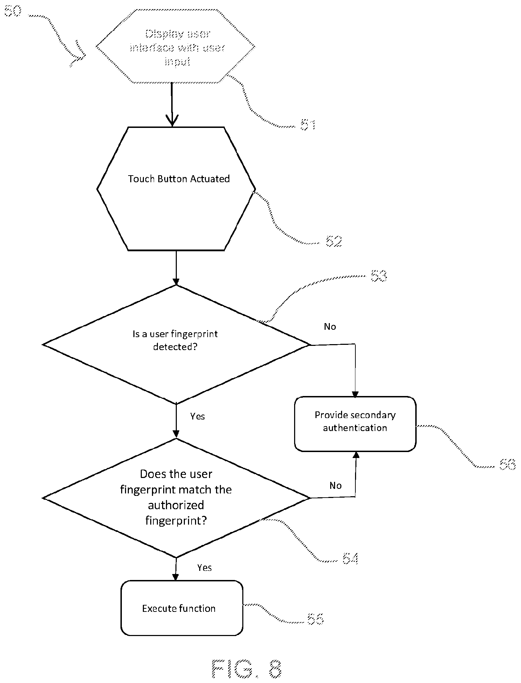

Referring additionally to FIG. 8, a flowchart of a method 50 for authenticating a user of the electronic device 20 is shown. Beginning at block 51, a user interface 28 having at least one user input 30 for executing a function is output on the screen 24. For example, the user interface may include a representation of a button or other input device that, when touched, instructs the electronic device 20 to carry out a function, e.g., post a message to a social media page, send a text, make a purchase, etc. Next at block 52 a user, wishing to execute the function, activates the user input 30, which may be in the form of a touch cell or button, by placing the user's finger 48 on the user input 30. At block 53, the processor detects the activation of the user input 30 and proceeds to scan the user fingerprint associated with the activation. If the scan provides data corresponding to a fingerprint the method moves to block 54, while if the scan does not provide data corresponding to a fingerprint the method moves to block 56. Blocks 54 and 56 are described below.

Fingerprint detection by the fingerprint reader 26 has two principle phases. The first phase, which occurs as the user activates the user input 30, is a scanning or detecting phase during which the user's finger 48 is scanned and data is collected with the light sensors 49. Detecting the user fingerprint may include detecting the user fingerprint within the area of the user input 30 or within the area 36 of the touch screen 24, depending on the configuration of the fingerprint reader 26. Detecting the user fingerprint may further include using the fingerprint reader 26 disposed above or below at least an area of the touch screen 24 where the at least one user input 30 is located when the user interface 28 is displayed.

The second phase corresponds to block 54 of the method 50 and includes comparing data corresponding to the user fingerprint as obtained during the scanning phase against data corresponding to an authorized fingerprint stored, for example, in memory of the electronic device. The second phase is an analysis phase where the collected data is analyzed by the processor 32 to generate a representation of the user's fingerprint. The processor 32 is configured to determine if the representation matches a baseline representation of the authorized user's fingerprint. The representations are not necessarily recreations or directly indicative of the actual pattern of ridges in the user's fingerprint. Rather, the representations are patterns of light representative of the user's fingerprint. The pattern of light that is representative of a user's fingerprint may be unique enough to distinguish scan results of an authenticated user from scan results of an unauthorized user. The fingerprint detection occurs simultaneously with activation of the user input 30.

The baseline representation (or baseline representations) may be collected during a configuration routine during which one or more fingerprint samples are collected from the user for later use in this matching process. Matching techniques for fingerprint scanning will be understood by those of skill in the art and will not be described in detail in this disclosure. These techniques or other pattern matching techniques may be applied in this context. If a match is determined, the method moves to block 55 of the method 50 includes executing the function associated with the user input 30, such as posting data to a social media network or website (via an application or an Internet interface), sending a text message, executing a payment via an Internet interface, or any function that is capable of being password protected. If the user fingerprint is not detected or if the user fingerprint detected does not match the authorized fingerprint, the method moves to block 56 includes providing a secondary authentication process.

If the user fingerprint does not match the authorized fingerprint, the method 50 may include inhibiting execution of the function. Inhibiting execution of the function may include, for example, "locking" the electronic device or application associated with the user input 30. Providing the secondary authentication process may include receiving a user personal identification number (PIN), comparing the user PIN against an authorized PIN stored in the electronic device 20, and executing the function when the user PIN matches the authorized PIN.

The scanning phase of fingerprint detection includes illuminating the user's finger 48 with light 57 emitted by one or more pixels 45. The pixels 45 may illuminate different areas of the user's finger 48 to progressively scan the user's finger 48. Data is collected from the light sensors 49 and the resulting data is considered collectively in the analysis phase. It will be appreciated that arrangements of sensors 49 different than the illustrated arrangement may be employed. It will also be appreciated that capacitance sensors instead of light sensors may be used to form the fingerprint images.

Regardless of whether the pixels are illuminated all at once, in blocks or individually, the pixels that are illuminated for the scanning phase may include all pixels in the predetermined area 47 disposed below the user input 30. In an embodiment of the fingerprint reader 226 where the fingerprint reader 226 is separately located from the user input 30, the user input 30 may also be used to determine the location of the user's finger 48 relative to the predetermined area 47 of the display 44 and the fingerprint reader 226. Once the location of the user's finger 48 is determined, the pixels 45 corresponding to the determined location may be the pixels that are illuminated for the scanning phase.

During the analysis phase, registration of the user's finger 48 may be considered to improve fingerprint detection. More specifically, the location and orientation of the user's finger 48 relative to the display 44 and fingerprint reader 26 may be used when interpreting the data from the light sensors 49. For example, the predetermined area 47 may have a longitudinal axis (sometimes referred to as a y-axis) and a latitudinal axis (sometimes referred to as an x-axis). By detecting where the user touches the user input 30, a shape and location of the touched area may be determined. The touched area may be rectangular or oval-shaped. A tilt angle of the longitudinal axis of the area touched by the user's finger 48 relative to the longitudinal axis and latitudinal axis of the predetermined area may be determined. This tilt angle, along with the location of the touched area, may be used in the analysis phase when generating the representation of the user's fingerprint from the data from the light sensors 49. For instance, the tilt angle and the location of the user's finger may be correlated with the data from the light sensors 49 to improve interpretation of the data.

The analysis uses differences in the surface contour of the user's finger 48 and resulting pattern of light representative of the user's fingerprint. The ridges found on the skin of the user's fingertip typically define the user's fingerprint. The skin's peaks and valleys (shown in exaggerated form in FIG. 7) that form the ridges will reflect light differently. This may be at least in part due to the presence of air in the valleys and that the index of refraction for air is different than the index of refraction for skin. These differences in reflection cause by the ridges are represented in the light that reaches the light sensors 49, even though the incident light 57 will be somewhat scattered as the light 57 is reflected off of the user's skin.

For instance, the amount of light that respectively reaches each light sensor 49 for the illumination of one pixel or a small group of pixels may indicate the local surface contour of the user's finger adjacent the illuminated pixel(s) 30, such as whether light 36 is incident on a peak or a valley and the orientation of the peak or valley relative to the longitudinal axis or the latitudinal axis of the predetermined area 28. With successive illumination of different parts of the user's finger 34, a map of the surface contour of the user's finger 34 may be generated. Therefore, the data output by the light sensors 49 contains information regarding the arrangement of ridges on the skin of the user's fingertip.

This data is analyzed to determine the representation of the user's fingerprint (e.g., the pattern of light representative of the user's fingerprint) that may be compared to one or more baseline representations of the user's fingerprint (e.g., one or more baseline patterns of light representative of the user's fingerprint) for authentication purposes. It is predicted that fingerprint analysis will improve with increases in resolution of the pixels 45 of the display 44. In one embodiment, a display 44 with resolution of 1080p is employed. Additionally, it is predicted that fingerprint analysis will be improved when the scanning is performed by illuminating one pixel at a time or scanning is performed by illuminating small groups of pixels (e.g., ten or fewer pixels) at a time to perform an x/y-axis scan of the user's finger 48 and, over time, generate the pattern of light representative of the user's fingerprint. In one embodiment, given enough data and processing of the data, it may be possible to generate a map of the surface contour of the user's finger 48 that is directly indicative of the actual pattern of ridges in the user's fingerprint.

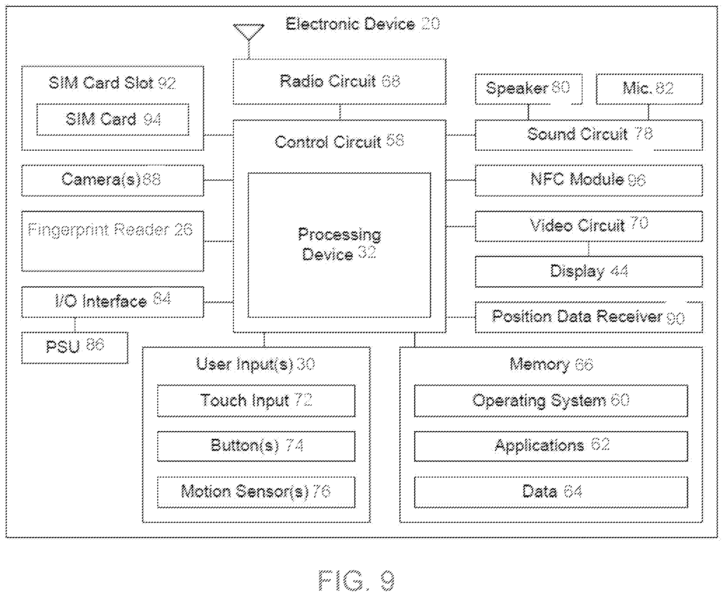

With additional reference to FIG. 9, a schematic block diagram of the electronic device 20 in its exemplary form as a mobile telephone is illustrated. The electronic device 20 includes a control circuit 58 that is responsible for overall operation of the electronic device 20, including controlling fingerprint scanning and user authentication. The control circuit 58 includes the processor 32 that executes an operating system 60 and various applications 62. Typically, control over the fingerprint scanning and user authentication is embodied as part of the operating system 60. In other embodiments, this functionality may be embodied as a dedicated application.

The operating system 60, the applications 62, and stored data 64 (e.g., data associated with the operating system 60, the applications 62, and user files), are stored on a memory 66. The operating system 60 and applications 62 are embodied in the form of executable logic routines (e.g., lines of code, software programs, etc.) that are stored on a non-transitory computer readable medium (e.g., the memory 66) of the electronic device 20 and are executed by the control circuit 58. The described fingerprint scanning and user authentication operations may be thought of as a method that is carried out by the electronic device 20.

The processor 32 of the control circuit 58 may be a central processing unit (CPU), microcontroller, or microprocessor. The processor 32 executes code stored in a memory (not shown) within the control circuit 58 and/or in a separate memory, such as the memory 66, in order to carry out operation of the electronic device 20. The memory 66 may be, for example, one or more of a buffer, a flash memory, a hard drive, a removable media, a volatile memory, a non-volatile memory, a random access memory (RAM), or other suitable device. In a typical arrangement, the memory 66 includes a non-volatile memory for long term data storage and a volatile memory that functions as system memory for the control circuit 58. The memory 66 may exchange data with the control circuit 58 over a data bus. Accompanying control lines and an address bus between the memory 66 and the control circuit 58 also may be present. The memory 66 is considered a non-transitory computer readable medium.

The electronic device 20 includes communications circuitry that enables the electronic device 20 to establish various wireless communication connections. In the exemplary embodiment, the communications circuitry includes a radio circuit 68. The radio circuit 68 includes one or more radio frequency transceivers and an antenna assembly (or assemblies). In the case that the electronic device 20 is a multi-mode device capable of communicating using more than one standard and/or over more than one radio frequency band, the radio circuit 68 represents one or more than one radio transceiver, one or more than one antenna, tuners, impedance matching circuits, and any other components needed for the various supported frequency bands and radio access technologies. The radio circuit 68 further represents any radio transceivers and antennas used for local wireless communications directly with another electronic device, such as over a Bluetooth interface.

The electronic device 20 further includes the display 44 for displaying information to a user. The display 44 may be coupled to the control circuit 58 by a video circuit 70 that converts video data to a video signal used to drive the display 44. The video circuit 70 may include any appropriate buffers, decoders, video data processors and so forth.

The electronic device 20 includes one or more user inputs 30 for receiving user input for controlling operation of the electronic device 20. Exemplary user inputs include, but are not limited to, a touch input or cell 72 that overlays or is part of the display 44 for touch screen functionality, one or more touch buttons 74, touch pads, keyboards, motion sensors 76 (e.g., gyro sensors, accelerometers), and so forth.

The electronic device 20 may further include a sound circuit 78 for processing audio signals. Coupled to the sound circuit 78 are a speaker 80 and a microphone 82 that enable audio operations that are carried out with the electronic device 20 (e.g., conduct telephone calls, output sound, capture audio for videos, etc.). The sound circuit 78 may include any appropriate buffers, encoders, decoders, amplifiers and so forth.

The electronic device 20 may further include one or more input/output (I/O) interface(s) 84. The I/O interface(s) 84 may be in the form of typical electronic device I/O interfaces and may include one or more electrical connectors for operatively connecting the electronic device 20 to another device (e.g., a computer) or an accessory (e.g., a personal handsfree (PHF) device) via a cable. Further, operating power may be received over the I/O interface(s) 84 and power to charge a battery of a power supply unit (PSU) 86 within the electronic device 20 may be received over the I/O interface(s) 84. The PSU 86 may supply power to operate the electronic device 10 in the absence of an external power source.

The electronic device 20 also may include various other components. As an example, one or more cameras 88 may be present for taking photographs or video, or for use in video telephony. As another example, a position data receiver 90, such as a global positioning system (GPS) receiver, may be present to assist in determining the location of the electronic device 20. The electronic device 20 also may include a subscriber identity module (SIM) card slot 92 in which a SIM card 94 is received. The slot 92 includes any appropriate connectors and interface hardware to establish an operative connection between the electronic device 20 and the SIM card 94.

The electronic device 20 also may include a near field communication (NFC) module 96 that is used for conducting near field communications. In one embodiment, fingerprint authentication using the above-described techniques may be used in conjunction with near field communications as part of a mobile payment process.

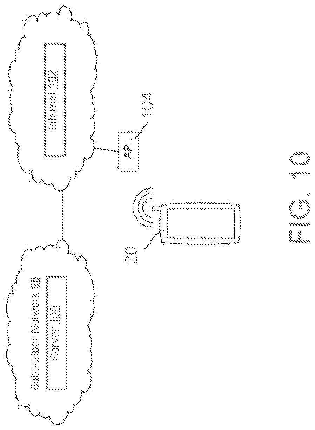

Referring to FIG. 10, schematically shown is a communications environment for the electronic device 20. In the communications environment, the electronic device 20 may carry out wireless communications. To conduct wireless communications, the electronic device 20 establishes network connectivity with one or more networks. Typically, the connection is made to a subscriber network 98 that services the physical geo-location of the electronic device 20. The network 98 may provide Internet access to the electronic device 20. In most cases, the network 98 is a cellular network operated by a respective cellular service telephone company. Exemplary network access technologies for the network 98 are typically cellular circuit-switched network technologies and include, but are not limited to, global system for mobile communications (GSM), code division multiple access (CDMA), wideband CDMA (WCDMA), and advanced or alternative versions of these standards. The networks may support general packet radio service (GPRS), universal mobile telecommunications system (UMTS), 3G, 4G long-term evolution (LTE), or other standards.

The network 98 supports communications such as, but not limited to, voice communications (e.g., telephone calls), video communications (e.g., video telephony), messaging (e.g., instant messaging, text and multimedia messaging, and electronic mail messaging), data transfers, and Internet browsing. To support the communications activity of the electronic device 20, the network 98 may include a server 100 (or servers). The server 100 may be configured as a typical computer system used to carry out server functions and may include a processor configured to execute software containing logical instructions that embody the functions of the server 100 and a memory to store such software and related data.

The communications between the electronic device 20 and the subscriber network may be established by way of a transmission medium (not specifically illustrated) of the subscriber network 98. The transmission medium may be any appropriate device or assembly, but is typically an arrangement of communications base stations (e.g., cellular service towers, also referred to as "cell" towers).

In some situations, the electronic device 20 may communicate with the Internet 102 via an access point 104 of a local area network (LAN) using a packet-switched protocol, such as IEEE 802.11a, IEEE 802.11b, IEEE 802.11g or IEEE 802.1In (commonly referred to as WiFi). Other LAN-based protocols are possible, such as WiMax under IEEE 802.16. The access point 104 is typically, but not necessarily, a wireless router.

Although certain embodiments have been shown and described, it is understood that equivalents and modifications falling within the scope of the appended claims will occur to others who are skilled in the art upon the reading and understanding of this specification.

## Claims

1. An electronic device (20) comprising:
a touch screen (24) configured to display a user interface (28) in an unlocked state having displayed thereon at least one touch-sensitive user input (30) for executing a function associated with a corresponding application;
a processor (32) having a memory for storing authorized fingerprint data corresponding to an authorized fingerprint; and
a fingerprint reader (26, 26a, 26b, 26c, 26d, 126, 226) coupled to the processor (32);
**characterized in that**
the fingerprint reader (26, 26a, 26b, 26c, 26d, 126, 226) is coupled to the at least one touch-sensitive user input (30) for obtaining user fingerprint data corresponding to a user fingerprint simultaneously with activation of the at least one touch-sensitive user input (30), and
the processor (32) is configured
to compare the user fingerprint data obtained by the fingerprint reader (26, 26a, 26b, 26c, 26d, 126, 226) with the authorized fingerprint data, and
upon the user fingerprint data corresponding to the authorized fingerprint data, execute the function associated with the corresponding application.

2. The electronic device (20) according to claim 1, wherein the touch screen (24) includes a perimeter (38) that bounds an area (36) in which the at least one touch-sensitive user input (30) is located.

3. The electronic device (20) according to claim 1 or claim 2, wherein the fingerprint reader (26, 26a, 26b, 26c, 26d, 126, 226) is disposed under or over the touch screen (22).

4. The electronic device (20) according to claim 2 or claim 3, further comprising a plurality of fingerprint readers (26a, 26b, 26c, 26d) that are disposed at separated locations within the perimeter (38).

5. The electronic device (20) according to any of claims 1-3, wherein an area of the fingerprint reader (126) is equal to:
an area (36) of the touch screen (24); or
an area of the at least one touch-sensitive user input (30).

6. The electronic device (20) according to any one of claims 1-5, wherein the at least one touch-sensitive user input (30) comprises:
a key (43) on an alphanumeric keyboard (42), wherein the alphanumeric keyboard (42) is displayed on the touch screen (24).

7. The electronic device (20) according to any one of claims 1-6, wherein the electronic device (20) comprises a smart phone.

8. A method (50) for authenticating a user of an electronic device (20) having a touch screen (24), comprising:
displaying a user interface in an unlocked state having at least one touch-sensitive user input for executing a function (51) associated with a corresponding application;
**characterized by**
obtaining user fingerprint data corresponding to a user fingerprint simultaneously with activation of the at least one touch-sensitive user input (53);
comparing the user fingerprint data against authorized fingerprint data corresponding to an authorized fingerprint associated with the electronic device (54); and
executing the function associated with the corresponding application when the user fingerprint data corresponds to the authorized fingerprint data (55).

9. The method (50) according to claim 8, wherein obtaining data corresponding to the user fingerprint (53) includes:
obtaining the data corresponding to the user fingerprint within an area of the at least one touch-sensitive user input; or
using a fingerprint reader disposed above or below at least an area of the touch screen where the at least one touch-sensitive user input is located when the user interface is displayed.

10. The method (50) according to claim 8 or 9, further comprising inhibiting execution of the function when the user fingerprint data does not correspond to the authorized fingerprint data.

11. The method (50) of any of claims 8-10, further comprising providing a secondary authentication process when the user fingerprint data does not correspond to the authorized fingerprint data (56).

12. The method (50) of claim 11, wherein providing the secondary authentication process (50) includes:
receiving a user personal identification number (PIN);
comparing the user PIN against an authorized PIN stored in the electronic device (20); and
executing the function when the user PIN matches the authorized PIN.

## Patentansprüche

1. Elektronische Vorrichtung (20), umfassend:
einen Touchscreen (24), der konfiguriert ist zum Anzeigen einer Benutzeroberfläche (28) in einem entsperrten Zustand, auf der mindestens eine berührungsempfindliche Benutzereingabe (30) zum Ausführen einer Funktion angezeigt wird, die einer entsprechenden Anwendung zugeordnet ist;
einen Prozessor (32), der einen Speicher zum Speichern von autorisierten Fingerabdruckdaten aufweist, die einem autorisierten Fingerabdruck entsprechen; und
einen Fingerabdruckleser (26, 26a, 26b, 26c, 26d, 126, 226), der mit dem Prozessor (32) verbunden ist;
**dadurch gekennzeichnet, dass**,
der Fingerabdruckleser (26, 26a, 26b, 26c, 26d, 126, 226) mit der mindestens einen berührungsempfindlichen Benutzereingabe (30) verbunden ist, um gleichzeitig mit einem Aktivieren der mindestens einen berührungsempfindlichen Benutzereingabe (30) Benutzerfingerabdruckdaten zu erhalten, die einem Benutzerfingerabdruck entsprechen, und
der Prozessor (32) konfiguriert ist zum
Vergleichen der Benutzerfingerabdruckdaten, die mit dem Fingerabdruckleser (26, 26a, 26b, 26c, 26d, 126, 226) erhalten werden, mit den autorisierten Fingerabdruckdaten, und
wenn die Benutzerfingerabdruckdaten den autorisierten Fingerabdruckdaten entsprechen, zum Ausführen der Funktion, die der entsprechenden Anwendung zugeordnet ist.

2. Elektronische Vorrichtung (20) nach Anspruch 1, wobei der Touchscreen (24) einen Umkreis (38) aufweist, der einen Bereich (36) begrenzt, in dem sich mindestens eine berührungsempfindliche Benutzereingabe (30) befindet.

3. Elektronische Vorrichtung (20) nach Anspruch 1 oder Anspruch 2, wobei der Fingerabdruckleser (26, 26a, 26b, 26c, 26d, 126, 226) unter oder über dem Touchscreen (22) angebracht ist.

4. Elektronische Vorrichtung (20) nach Anspruch 2 oder Anspruch 3, die außerdem eine Vielzahl von Fingerabdrucklesern (26a, 26b, 26c, 26d) umfasst, die an getrennten Orten innerhalb des Umkreises (38) angebracht sind.

5. Elektronische Vorrichtung (20) nach einem der Ansprüche 1 bis 3, wobei ein Bereich des Fingerabdrucklesers (126) gleich ist wie:
ein Bereich (36) des Touchscreens (24); oder
ein Bereich der mindestens einen berührungsempfindlichen Benutzereingabe (30).

6. Elektronische Vorrichtung (20) nach einem der Ansprüche 1 bis 5, wobei die mindestens eine berührungsempfindliche Benutzereingabe (30) umfasst:
eine Taste (43) einer alphanumerischen Tastatur (42), wobei die alphanumerische Tastatur (42) auf dem Touchscreen (24) angezeigt wird.

7. Elektronische Vorrichtung (20) nach einem der Ansprüche 1 bis 6, wobei die elektronische Vorrichtung (20) ein Smartphone umfasst.

8. Verfahren (50) zum Authentifizieren eines Benutzers einer elektronischen Vorrichtung (20), die einen Touchscreen (24) aufweist, umfassend:
Anzeigen einer Benutzeroberfläche in einem entsperrten Zustand, die mindestens eine berührungsempfindliche Benutzereingabe zum Ausführen einer Funktion (51) aufweist, die einer entsprechenden Anwendung zugeordnet ist;
**gekennzeichnet durch**:
Erhalten von Benutzerfingerabdruckdaten, die einem Benutzerfingerabdruck entsprechen, gleichzeitig mit einem Aktivieren der mindestens einen berührungsempfindlichen Benutzereingabe (53);
Vergleichen der Benutzerfingerabdruckdaten mit autorisierten Fingerabdruckdaten, die einem autorisierten Fingerabdruck entsprechen, welcher der elektronischen Vorrichtung (54) zugeordnet ist; und
Ausführen der Funktion, die der entsprechenden Anwendung zugeordnet ist, wenn die Benutzerfingerabdruckdaten den autorisierten Fingerabdruckdaten (55) entsprechen.

9. Verfahren (50) nach Anspruch 8, wobei das Erhalten der Daten, die dem Benutzerfingerabdruck (53) entsprechen, aufweist:
Erhalten der Daten, die dem Benutzerfingerabdruck entsprechen, innerhalb eines Bereichs der mindestens einen berührungsempfindlichen Benutzereingabe; oder
Verwenden eines Fingerabdrucklesers, der über oder unter dem mindestens einen Bereich des Touchscreens angebracht ist, in dem sich die mindestens eine berührungsempfindliche Benutzereingabe befindet, wenn die Benutzeroberfläche angezeigt wird.

10. Verfahren (50) nach Anspruch 8 oder 9, das außerdem ein Verhindern des Ausführens der Funktion umfasst, wenn die Benutzerfingerabdruckdaten nicht den autorisierten Fingerabdruckdaten entsprechen.

11. Verfahren (50) nach einem der Ansprüche 8 bis 10, das außerdem ein Bereitstellen eines sekundären Authentifizierungsprozesses umfasst, wenn die Benutzerfingerabdruckdaten nicht den autorisierten Fingerabdruckdaten (56) entsprechen.

12. Verfahren (50) nach Anspruch 11, wobei das Bereitstellen des sekundären Authentifizierungsprozesses (50) aufweist:
Empfangen einer persönlichen Identifizierungsnummer (PIN) des Benutzers;
Vergleichen der Benutzer-PIN mit einer autorisierten PIN, die in der elektronischen Vorrichtung (20) gespeichert ist; und
Ausführen der Funktion, wenn die Benutzer-PIN mit der autorisierten PIN übereinstimmt.

## Revendications

1. Dispositif électronique (20) comprenant :
un écran tactile (24) configuré pour afficher une interface utilisateur (28) dans un état déverrouillé sur lequel est affichée au moins une entrée utilisateur tactile (30) pour exécuter une fonction associée à une application correspondante ;
un processeur (32) ayant une mémoire pour stocker des données d'empreintes digitales autorisées correspondant à une empreinte digitale autorisée ; et
un lecteur d'empreintes digitales (26, 26a, 26b, 26c, 26d, 126, 226) couplé au processeur (32) ;
**caractérisé en ce que** :
le lecteur d'empreintes digitales (26, 26a, 26b, 26c, 26d, 126, 226) est couplé à l'au moins une entrée utilisateur tactile (30) pour obtenir des données d'empreintes digitales de l'utilisateur correspondant à une empreinte digitale de l'utilisateur simultanément à l'activation de l'au moins une entrée utilisateur tactile (30), et
le processeur (32) est configuré :
pour comparer les données d'empreintes digitales de l'utilisateur obtenues par le lecteur d'empreintes digitales (26, 26a, 26b, 26c, 26d, 126, 226) avec les données d'empreintes digitales autorisées, et
lorsque les données d'empreintes digitales de l'utilisateur correspondent aux données d'empreintes digitales autorisées, pour exécuter la fonction associée à l'application correspondante.

2. Dispositif électronique (20) selon la revendication 1, dans lequel l'écran tactile (24) comprend un périmètre (38) qui délimite une zone (36) dans laquelle l'au moins une entrée utilisateur tactile (30) est située.

3. Dispositif électronique (20) selon la revendication 1 ou la revendication 2, dans lequel le lecteur d'empreintes digitales (26, 26a, 26b, 26c, 26d, 126, 226) est disposé au-dessus ou au-dessous de l'écran tactile (22).

4. Dispositif électronique (20) selon la revendication 2 ou la revendication 3, comprenant en outre une pluralité de lecteurs d'empreintes digitales (26a, 26b, 26c, 26d) qui sont disposés à des emplacements séparés dans le périmètre (38).

5. Dispositif électronique (20) selon l'une quelconque des revendications 1 à 3, dans lequel une zone du lecteur d'empreintes digitales (126) est égale à :
une surface (36) de l'écran tactile (24) ; ou
une zone de l'au moins une entrée utilisateur tactile (30) .

6. Dispositif électronique (20) selon l'une quelconque des revendications 1 à 5, dans lequel l'au moins une entrée utilisateur tactile (30) comprend :
une touche (43) sur un clavier alphanumérique (42), où le clavier alphanumérique (42) est affiché sur l'écran tactile (24).

7. Dispositif électronique (20) selon l'une quelconque des revendications 1 à 6, dans lequel le dispositif électronique (20) comprend un téléphone intelligent.

8. Procédé (50) d'authentification d'un utilisateur d'un dispositif électronique (20) comportant un écran tactile (24), le procédé comprenant :
l'affichage d'une interface utilisateur dans un état déverrouillé ayant au moins une entrée utilisateur tactile pour exécuter une fonction (51) associée à une application correspondante ;
**caractérisé par** :
l'obtention de données d'empreintes digitales de l'utilisateur correspondant à une empreinte digitale de l'utilisateur simultanément à l'activation de l'au moins une entrée utilisateur tactile (53) ;
la comparaison des données d'empreintes digitales de l'utilisateur avec des données d'empreintes digitales autorisées correspondant à une empreinte digitale autorisée associée au dispositif électronique (54) ; et
l'exécution de la fonction associée à l'application correspondante lorsque les données d'empreintes digitales de l'utilisateur correspondent aux données d'empreintes digitales autorisées (55).

9. Procédé (50) selon la revendication 8, dans lequel l'obtention des données correspondant à l'empreinte digitale de l'utilisateur (53) comprend :
l'obtention des données correspondant à l'empreinte digitale de l'utilisateur dans une zone de l'au moins une entrée utilisateur tactile ; ou
l'utilisation d'un lecteur d'empreintes digitales disposé au-dessus ou au-dessous d'au moins une zone de l'écran tactile, où l'au moins une entrée utilisateur tactile est située lorsque l'interface utilisateur est affichée.

10. Procédé (50) selon la revendication 8 ou la revendication 9, comprenant en outre l'inhibition de l'exécution de la fonction lorsque les données d'empreintes digitales de l'utilisateur ne correspondent pas aux données d'empreintes digitales autorisées.

11. Procédé (50) selon l'une quelconque des revendications 8 à 10, comprenant en outre la fourniture d'un processus d'authentification secondaire lorsque les données d'empreintes digitales de l'utilisateur ne correspondent pas aux données d'empreintes digitales autorisées (56).

12. Procédé (50) selon la revendication 11, dans lequel la fourniture du processus d'authentification secondaire (50) comprend :
la réception d'un numéro d'identification personnel, PIN, de l'utilisateur ;
la comparaison du PIN de l'utilisateur avec un PIN autorisé stocké dans le dispositif électronique (20) ; et
l'exécution de la fonction lorsque le PIN de l'utilisateur correspond au PIN autorisé.
